# DEMANDE DE BREVET EUROPEEN

(11) **EP 0 869 567 A1**
(43) Date de publication de la demande: **07.10.1998**
(21) Numéro de dépôt: 98400642.9
(22) Date de dépôt: 19.03.1998
(51) Int. Cl.: H01M 4/58, H01M 4/90, H01M 4/36

(54) **Procédé de traitement d'un matériau carboné**

(30) Priorité: 24.03.1997 FR 9703541
(71) Demandeur: ALCATEL ALSTHOM COMPAGNIE GENERALE D'ELECTRICITE, 75008 Paris (FR)
(72) Inventeur: Galaj, Stanislas, 94110 Arcueil (FR); Simon, Bernard, 92130 Issy Les Moulineaux (FR); Feyrin, Sylvie, 33140 Villenave D'Ornon (FR)
(74) Mandataire: Buffière, Michelle

(57) **Abrégé**

La présente invention a pour objet un procédé de fabrication de la matière active d'électrode pour un générateur électrochimique, ladite matière active étant composée de particules de carbone cristallisé susceptibles d'insérer du lithium dans leur structure, comprenant au moins les étapes suivantes:
- on prépare une solution, dans un solvant volatil chimiquement inerte, d'au moins un composé constitué de molécules volumineuses susceptibles de créer une liaison covalente avec un groupement fonctionnel oxygéné qui comprend au moins un composé organométallique choisi parmi un borane, un phosphate, un organo-phosphoré, un organo-étain, un organo-tungstène, un organo-titane et le polyméthylhydroxysiloxane,
- on immerge lesdites particules dans ladite solution,
- on élimine ledit solvant pour obtenir lesdites particules sèches.

## Description

La présente invention concerne un procédé de traitement d'un matériau carboné utilisé comme matière active à insertion de lithium dans l'électrode d'un générateur électrochimique. Elle s'étend en outre à la matière active obtenue et au générateur électrochimique rechargeable à électrolyte non-aqueux le contenant.

Récemment sont apparues des électrodes, fonctionnant en milieu organique, ayant comme matière active un matériau à base de carbone susceptible d'insérer dans sa structure des ions, par exemple du lithium, qui sont ensuite désinsérés au cours du cyclage. Comme matière active d'électrode négative, les matériaux les plus performants en terme de densité d'énergie sont notamment les carbones cristallisés de type graphite. Mais ces carbones connaissent des problèmes liés au flux d'ions traversant l'interface carbone/électrolyte.

D'une part, en présence de certains solvants organiques, l'intercalation d'ions solvatés dans la structure graphitique entraîne une fragmentation des particules (exfoliation) plus ou moins complète selon les cas, qui s'accompagne d'une baisse très marquée du rendement faradique de la matière active. On peut choisir des solvants qui.n'induisent pas un tel phénomène, mais on se prive de certains solvants présentant par ailleurs des propriétés intéressantes. C'est notamment le cas du carbonate de propylène (PC) qui améliore sensiblement les performances à basses températures du générateur électrochimique.

On peut se limiter à des carbones à structure désordonnée peu sujets à l'exfoliation, comme les cokes ou les carbones durs. Mais ces matériaux sont nettement moins performants en densité d'énergie que les carbones cristallisés en raison de leur faible densité.

D'autre part, dans des conditions anormales de fonctionnement entraînant une élévation importante de la température locale, l'augmentation de la vitesse de désinsertion des ions peut entraîner un emballement thermique généralisé.

La solution de ces deux problèmes réside dans un meilleur contrôle des phénomènes se produisant à l'interface carbone/électrolyte.

Le brevet EP-0 517 070, publié le 09/12/92, décrit un matériau carboné composé de grain monophasé cristallisé, chaque grain étant enrobé d'une couche d'un matériau imperméable au solvant mais pas au lithium, notamment un carbone désordonné. Ainsi la couche superficielle empêche l'intercalation des molécules de solvant responsables de l'exfoliation. Le dépôt du matériau imperméable n'étant pas sélectif, cette solution est délicate à mettre en oeuvre pour obtenir une couche mince homogène.

La présente invention a pour but de proposer un procédé de traitement surfacique de la matière active conservant les propriétés intrinsèques du matériau carboné et facile à mettre en oeuvre.

L'objet de la présente invention est un procédé de fabrication de la matière active d'électrode pour un générateur électrochimique rechargeable à électrolyte non-aqueux, ladite matière active étant composée de particules de carbone cristallisé susceptibles d'insérer du lithium dans leur structure, comprenant au moins les étapes suivantes:
- on prépare une solution, dans un solvant volatil chimiquement inerte, d'au moins un composé constitué de molécules volumineuses susceptibles de créer une liaison covalente avec un groupement fonctionnel oxygéné qui comprend au moins un composé organométallique choisi parmi un borane, un phosphate, un organo-phosphoré, un organo-étain, un organo-tungstène, un organo-titane et le polyméthylhydroxysiloxane,
- on immerge lesdites particules dans ladite solution,
- on élimine ledit solvant pour obtenir lesdites particules sèches.

La modification superficielle du carbone est réalisée par des réactions chimiques sélectives ne mettant en jeu que les groupements fonctionnels oxygénés (comme ceux de type carboxylique, carbonyle, phénol, lactone, quinone, ...) présents en surface et plus particulièrement à l'extrémité des plans graphitiques. Le traitement consiste à faire réagir avec ces groupements fonctionnels un composé susceptible de se lier fortement, pour aboutir à un greffage de nouvelles espèces en surface du graphite. Ce composé consiste en molécules volumineuses capables de contrôler les flux ioniques à l'interface par effet stérique. Ces molécules présentent des masses moléculaires élevées, supérieures à 100g/mole. L'observation au microscope à balayage de la matière active selon l'invention montre que le composé se place au bord des plans graphitiques où les groupements oxygénés surfacique sont les plus nombreux. Ces grosses molécules gênent alors fortement l'intercalation d'ions solvatés volumineux entre les plans.

Selon l'efficacité de la réaction lesdites particules sèches contiennent une quantité comprise entre 0,1 et 10% en poids dudit composé. La quantité de composé fixé est mesurée par la prise de poids de la matière active au cours du traitement rapportée au poids initial de matière active.

Par le procédé selon la présente invention, on peut fabriquer une matière active d'électrode à base de tout type de carbone. De préférence ledit carbone est choisi parmi un graphite naturel, un graphite artificiel, un carbone cristallisé sous forme de sphères et un carbone cristallisé sous forme de fibres.

De manière connue, on réalise une électrode contenant la matière active selon l'invention. On prépare une pâte contenant la matière active divisée et une solution, ou dispersion, de polymère dans un solvant ou un mélange de solvants (eau, alcools, amines, dioxane, N-méthylpyrrolidone, ...). Puis on étale la pâte à l'aide d'une réglette calibrée sur un support conducteur (feuillard, déployé, ...), en général métallique (cuivre, nickel, acier inox, ...). L'électrode est enfin séchée à l'étuve, par exemple à 120°C, et calandrée jusqu'à obtention de la porosité désirée, habituellement 20% à 60%.

L'invention a aussi pour objet un générateur électrochimique rechargeable à électrolyte non-aqueux comprenant au moins une électrode contenant la matière active fabriquée par le procédé selon l'invention.

D'autres caractéristiques et avantages de la présente invention apparaîtront au cours de la lecture des exemples suivants de réalisation, donnés bien entendu à titre illustratif et non limitatif, et dans le dessin annexé sur lequel:
- la figure 1 représente l'évolution de la tension en fonction de la capacité chargée et déchargée d'un générateur contenant une matière active selon l'art antérieur au cours du premier cycle,
- la figure 2 est analogue à la figure 1 pour une matière active fabriquée par le procédé selon l'invention à partir d'un graphite artificiel,
- la figure 3 est analogue à la figure 1 pour un graphite naturel et pour une matière active fabriquée par le procédé selon l'invention à partir d'un graphite naturel.

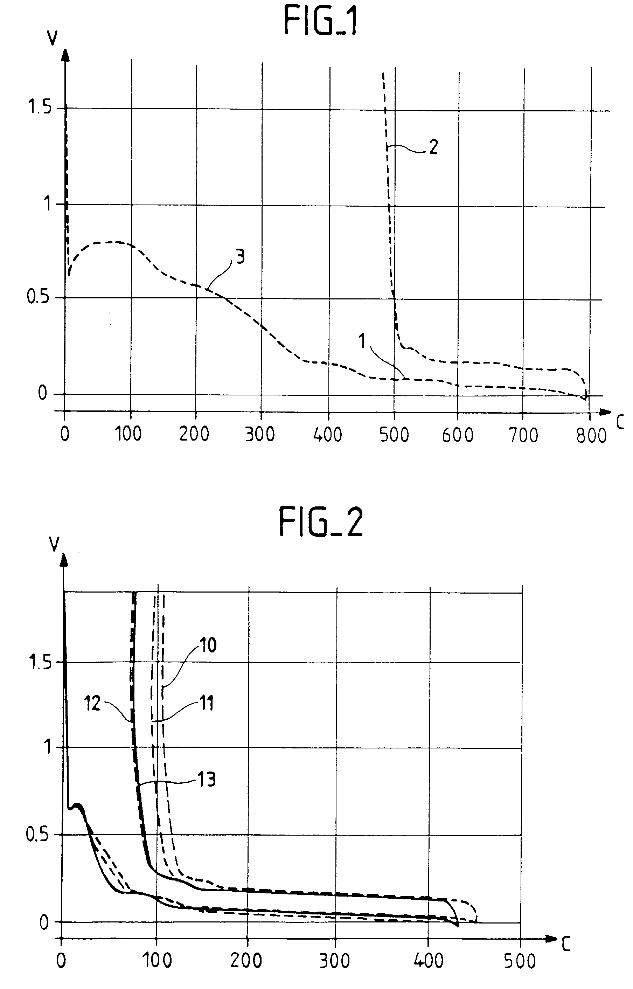

Sur les figures 1 à 3, la tension V du générateur en volts est donnée en ordonnée, et en abscisse la capacité C du générateur en mAh/g.

### EXEMPLE 1

On réalise une électrode pour un générateur électrochimique au lithium à partir d'une matière active de l'art antérieur qui est un graphite artificiel en poudre de référence commerciale "TIMCAL SFG44". La poudre a une granulométrie moyenne de 20µm. La poudre de graphite et du noir de carbone sont ajoutés à une suspension de polytétrafluoroéthylène (PTFE) dans l'eau pour former une pâte qui est ensuite étalée sur un support conducteur qui est en nickel déployé. Après séchage l'électrode ainsi réalisée contient 5% en poids de PTFE, 5% en poids de noir de carbone et 90% en poids de graphite, hors support.

On introduit l'électrode précédemment fabriquée dans un générateur de format bouton face à une contre-électrode de lithium encadrant un séparateur en polypropylène microporeux. Le couple électrochimique est imprégné d'un électrolyte ternaire qui est une solution d'hexafluorophosphate de lithium LiPF₆ une concentration 1M dans un mélange de solvants composé de 20% en poids de carbonate de propylène (PC), 20% en poids de carbonate d'éthylène (EC), et 60% en poids de carbonate de diméthyle (DMC).

Les courbes 1 et 2 sur la figure 1 représentent un premier cycle électrochimique de charge/décharge effectué à température ambiante à un régime de 20mA/g.

Lors du premier cycle galvanostatique, on constate une perte faradique due principalement à deux phénomènes irréversibles:
- la passivation de l'électrode de carbone causée par la réduction électrochimique de l'électrolyte à bas potentiel (0,7V/Li) conduisant à la formation de produits insolubles qui précipite à la surface du carbone;
- l'exfoliation des particules de graphite liée à l'intercalation d'ions lithium solvatés qui provoque une perte faradique importante.

L'exfoliation 3 est particulièrement visible en présence de PC notamment entre 0,6V et 0,2V/Li.

### EXEMPLE 2

On fabrique quatre échantillons de matière active selon l'invention pour un générateur électrochimique au lithium à partir d'un graphite artificiel en poudre de référence commerciale "TIMCAL SFG44", analogue à celui de l'exemple 1, qui est traité par une solution de polyméthylhydroxysiloxane (PMHS) de formule développée:

CH₃-Si(CH₃)₂-O-[-Si(CH₃)₂-O-]ₙ-Si(CH₃)₂-CH₃

La poudre de graphite de granulométrie moyenne 20µm est mise en suspension dans une solution de PMHS dans du chlorure de méthylène (CH₂Cl₂) et laissée à son contact pendant 12 heures. Le solvant est ensuite éliminé, notamment par évaporation. Le gain de poids de la poudre de graphite après traitement est respectivement de 1%, 2%, 3% et 6% pour les quatre échantillons fabriqués.

Avec les matières actives précédemment fabriquée, on réalise quatre électrodes qu'on introduit dans un générateur de format bouton afin de les évaluer électrochimiquement, comme décrit dans l'exemple 1.

On observe une réduction importante des pertes faradiques (figure 2). Les pertes diminuent lorsque la quantité de composé fixé passe de 1% (courbe 10) à 2% (courbe 11) puis 3% (courbe 12). Une quantité plus élevée de 6% (courbe 13) ne présente pas de gain par rapport à un taux de 3% (courbe 12).

### EXEMPLE 3

Le tableau ci-dessous récapitule les pertes de capacité irréversibles P, exprimées en mAh/g de matière active, observées au premier cycle pour des électrodes contenant la matière active fabriquée par le procédé selon l'invention à partir d'un graphite artificiel (SFG44) traité par des composés de différentes masses moléculaires, contenant du silicium, du phosphore ou du bore, par comparaison avec le graphite non traité.

**TABLEAU**

| composé | masse moléculaire du composé en g | taux de composé fixé en % | perte irréversible en mAh/g |
|---|---|---|---|
| SFG44 non traité | - | 0 | 478 |
| POCl₃ | 153 | 3 | 399 |
| B(OC₂H₅)₃ | 146 | 3 | 381 |
| PCl₅ | 208 | 3 | 364 |
| PCl₃ | 137 | 3 | 353 |
| PMHS | ≥222 | 3 | 80 |
| PMHS | ≥222 | 6 | 80 |

### EXEMPLE 4

On fabrique une matière active de manière analogue à l'exemple 2, à l'exception du fait que l'on part d'un graphite naturel dit "graphite de Madagascar" qui est traité par une solution de PMHS. Le gain de poids de la poudre de graphite après traitement est de 6%.

Avec la matière active précédemment fabriquée, on réalise une électrode qu'on introduit dans un générateur de format bouton afin de l'évaluer électrochimiquement, comme décrit dans l'exemple 1.

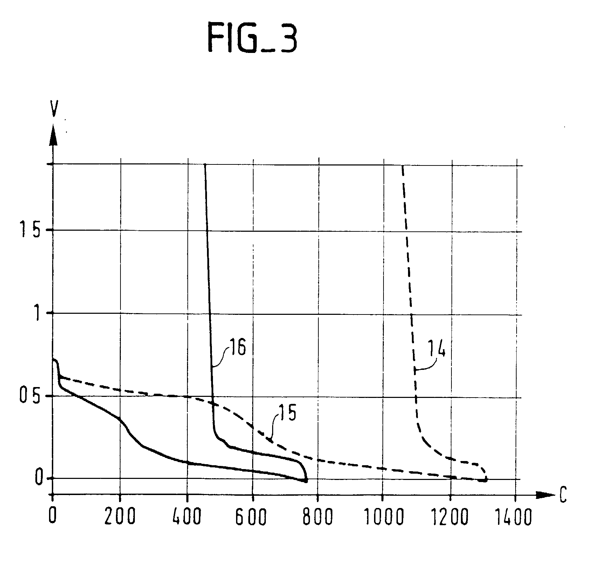

Comme le montre la courbe 14 de la figure 3 qui concerne une matière active de l'art antérieur, le graphite naturel non traité est très sensible à l'exfoliation 15. La matière active selon l'invention fabriquée précédemment à partir du graphite naturel présente une réduction importante de ce phénomène (courbe 16 de la figure 3).

## Revendications

1. Procédé de fabrication de la matière active d'électrode pour un générateur électrochimique, ladite matière active étant composée de particules de carbone cristallisé susceptibles d'insérer du lithium dans leur structure, comprenant au moins les étapes suivantes:
- on prépare une solution, dans un solvant volatil chimiquement inerte, d'au moins un composé constitué de molécules volumineuses susceptibles de créer une liaison covalente avec un groupement fonctionnel oxygéné qui comprend au moins un composé organométallique choisi parmi un borane, un phosphate, un organo-phosphoré, un organo-étain, un organo-tungstène, un organo-titane et le polyméthylhydroxysiloxane,
- on immerge lesdites particules dans ladite solution,
- on élimine ledit solvant pour obtenir lesdites particules sèches.

2. Procédé selon la revendication 1, dans lequel lesdites particules sèches contiennent une quantité comprise entre 0,1 et 10% en poids dudit composé.

3. Matière active d'électrode fabriquée par le procédé selon l'une des revendications précédentes, dans laquelle ledit carbone cristallisé est choisi parmi un graphite naturel, un graphite artificiel, un carbone cristallisé sous forme de sphères et un carbone cristallisé sous forme de fibres.

4. Générateur électrochimique rechargeable à électrolyte non-aqueux comprenant au moins une électrode contenant la matière active fabriquée par le procédé selon l'une des revendications précédentes.
